# EUROPÄISCHE PATENTANMELDUNG

(11) **EP 2 030 518 A1**
(43) Veröffentlichungstag der Anmeldung: **04.03.2009**
(21) Anmeldenummer: 08450111.3
(22) Anmeldetag: 22.07.2008
(51) Int. Cl.: A43B 7/28, A43B 13/12, A43B 17/00, B29D 31/50, B29D 31/515

(54) **Schuheinlage**

(30) Priorität: 25.07.2007 AT 11792007
(71) Anmelder: Mucos Korkproduktions Gmbh, 4925 Pramet (AT)
(72) Erfinder: Johannes Vogl, A 4973 Senftenbach (AT); Rudolf Keresztesi, A 4880 St. Georgen (AT); Adolf Spreitzer, A 4770 Andorf (AT); Johannes Sternbauer, A 4912 Neuhofen (AT); Dipl.Ing. Martin Leodolter, 4912 Neuhofen (AT); Mag. Otto Leodolter, 4921 Hohenzell (AT)
(74) Vertreter: Hübscher, Helmut

(57) **Zusammenfassung**

Es wird eine Schuheinlage in Form eines Fußbettes mit einem Grundkörper (1) und wenigstens einem Stützkörper (2) beschrieben, der einen im formgebenden Grundkörper (1) aus gebundenem Korkgranulat eingebetteten Einsatz bildet,. Um eine vorteilhafte Anpassung an unterschiedliche Fußformen zu ermöglichen, wird vorgeschlagen, dass der Stützkörper (2) zur nachträglichen Anpassung des Grundkörpers (1) an unterschiedliche Fußformen aus einem plastisch verformbaren Werkstoff besteht.

## Beschreibung

Die Erfindung bezieht sich auf eine Schuheinlage in Form eines Fußbettes mit einem Grundkörper und wenigstens einem Stützkörper, der einen im formgebenden Grundkörper aus gebundenem Korkgranulat eingebetteten Einsatz bildet.

Um Schuheinlagen zur Anpassung an unterschiedliche anatomische Voraussetzungen nicht aus gesonderten Zuschnitten aufwändig formen zu müssen, ist es bekannt (DE 298 10 518 U1), die Schuheinlagen zur Bildung des jeweils gewünschten Fußbettes baukastenartig aus einem Grundkörper und verschiedenen Stützkörpern zusammenzusetzen, was jedoch noch immer einen beachtlichen Herstellungsaufwand mit sich bringt, sind doch die Stützkörper gegebenenfalls nach einer formgebenden Nachbearbeitung auf dem Grundkörper zu positionieren und mit dem Grundkörper zu verbinden. Dazu kommt, dass die vorzugsweise aus einem thermoplastischen Kunststoff gefertigten Stützkörper höheren Anforderungen hinsichtlich der Feuchtigkeitsregulierung, der Wärmedämmeigenschaften und der Belüftung nicht genügen, wie sie Schuheinlagen aus einem mit einem Bindemittel versetzten Korkgranulat durchaus erfüllen können. Für den Einsatz solcher Schuheinlagen aus einem mit einem Bindemittel versetzten Korkgranulat ist es bekannt, in den das Fußbett formenden Grundkörper aus gebundenem Korkgranulat einen Stützkörper einzusetzen, wobei dieser Stützkörper aus einer Stützfeder (DE 1 876 930 U) oder einer Zehen- bzw. Ferseneinlage aus einem Faserwerkstoff bestehen kann. Nachteilig bei diesen bekannten Schuheinlagen ist allerdings, dass mit der Ausformung des Grundkörpers mit dem eingebettenen Stützkörper die Form der Schuheinlage unveränderbar vorgegeben ist.

Der Erfindung liegt somit die Aufgabe zugrunde, eine Schuheinlage der eingangs genannten Art so auszugestalten, dass sich sowohl einfache Möglichkeiten zur Anpassung an unterschiedliche anatomische Voraussetzungen ergeben als auch hohe Anforderungen bezüglich der Feuchtigkeitsregulierung, der Wärmedämmeigenschaften und der Belüftung erfüllt werden können.

Die Erfindung löst die gestellte Aufgabe dadurch, dass der Stützkörper zur nachträglichen Anpassung des Grundkörpers an unterschiedliche Fußformen aus einem plastisch verformbaren Werkstoff besteht.

Durch den das Fußbett formenden Grundkörper aus gebundenem Korkgranulat werden die sich hinsichtlich der Feuchtigkeitsregulierung, der Wärmedämmung und der Belüftung ergebenden Materialeigenschaften des Korks vorteilhaft genützt, wobei von einer durchschnittlichen Form des Fußbettes ausgegangen werden kann. Der in den Grundkörper eingebettete, üblicherweise plattenförmige Stützkörper kann zur Anpassung an Abweichungen von der durchschnittlichen Fußbettform im Bereich dieser Abweichungen nachträglich plastisch verformt werden, sodass es keiner neu zu erstellenden Schuheinlage zur Anpassung an besondere anatomische Begebenheiten bedarf. Es kann vielmehr die für eine Erstausrüstung des Schuhs geeignete, erfindungsgemäße Schuheinlage im Bedarfsfall beispielsweise anhand eines üblichen Gipsabdruckes der Fußform verformt werden, wobei die dabei auftretende plastische Verformung des Stützkörpers für eine bleibende Anpassung sorgt.

Der durch den Stützkörper gebildete Einsatz im Grundkörper aus einem gebundenen Korkgranulat kann aus einer metallischen Platte, z. B. auf Aluminiumbasis, gefertigt sein, wenn dafür gesorgt ist, dass das elastische Verhalten dieser Platte ausreicht, damit die Schuheinlage die gehbedingte Abrollbewegung des Schuhs ohne plastische Verformung mitmachen kann. Besonders vorteilhafte Verhältnisse ergeben sich allerdings in diesem Zusammenhang dadurch, dass der Stützkörper aus einer thermoplastischen Kunststoffplatte besteht, so dass eine plastische Verformung des Stützkörpers nur unter einer entsprechenden Erwärmung der Schuheinlage vorgenommen werden kann.

Zur Herstellung einer erfindungsgemäßen Schuheinlage kann von einem für die Formung einer Schuheinlage aus einem gebundenen Korkgranulat üblichen Verfahren ausgegangen werden, bei dem das mit einem Bindemittel versetzte Korkgranulat in eine Form eingefüllt und mit dem Schließen der Form unter Wärme und Druck zum Grundkörper ausgeformt wird. Es ist jedoch in Abkehrung vom üblichen Verfahrensablauf dafür zu sorgen, dass zunächst eine abgemessene Teilmenge des benötigten Korkgranulats in die Form eingefüllt wird, dass dann der Stützkörper auf die abgemessene Teilmenge aufgebracht wird, bevor der Stützkörper mit der restlichen Menge an Korkgranulat abgedeckt und das Korkgranulat mit dem Schließen der Form unter Einbindung des Stützkörpers zum Grundkörper ausgeformt wird, und dass gegebenenfalls der Grundkörper nachträglich durch eine plastische Verformung des in ihm eingebetteten Stützkörpers an die Fußform angepasst wird. Durch das Einbringen des vorzugsweise plattenförmigen Stützkörpers zwischen zwei abgemessene Teilmengen des mit einem Bindemittel versetzten Korkgranulats stellen sich beim Schließen der Form die Schichtdicken des Korkgranulats ober- und unterhalb des Stützkörpers selbständig ein, wobei sich bei einem metallischen Stützkörper aufgrund der Druckbelastung und bei einem thermoplastischen Werkstoff durch das Zusammenwirken von Druck und Wärme eine entsprechende Angleichung des plattenförmigen Stützkörpers an einen angenähert mittigen Verlauf zwischen den Oberflächen der Korkgranulatschichten ergibt. Das entsprechend der geschlossenen Form durch den Grundkörper aus gebundenem Korkgranulat geformte Fußbett kann im Bedarfsfall durch ein plastisches Verformen des Stützkörpers nachträglich an Fußformen und -stellungen angepasst werden, die von der ursprünglich hergestellten Fußbettform abweichen.

In der Zeichnung ist der Erfindungsgegenstand beispielsweise dargestellt. Es zeigen
- Fig. 1: eine erfindungsgemäße Schuheinlage in einem vereinfachten Längsschnitt,
- Fig. 2: einen mit einer Teilmenge des benötigten Korkgranulats gefüllten Unterteil einer Form zur Herstellung einer Schuheinlage nach Fig. 1 in einem Längsschnitt und
- Fig. 3: die mit Hilfe eines Druckstempels geschlossene Form gemäß der Fig. 2.

Die ein Fußbett bildende Schuheinlage gemäß dem dargestellten Ausführungsbeispiel weist einen Grundkörper 1 aus einem mit Hilfe eines Bindemittels gebundenen Korkgranulats auf, in das ein plattenförmiger, plastisch verformbarer Stützkörper 2 als Einsatz eingebettet ist. Aufgrund dieser Einbettung des nicht zwingend mit einer einheitlichen Dicke gefertigten Stützkörpers 2 in den Grundkörper 1 ergeben sich für den Stützkörper 2 Decklagen aus einer oberen und einer unteren Korkschicht 3, 4 aus einem gebundenen Korkgranulat, das unter Mitwirkung der Stützfunktion des Stützkörpers 2 das Fußbett formt, wobei eine über die Auftrittfläche durchgehende Feuchtigkeitsregulierung und Belüftung durch die Korkschicht 3 sichergestellt werden kann. Es braucht wohl nicht besonders hervorgehoben zu werden, dass es auch im Rahmen der Erfindung liegt, den Stützkörper 2 in zwei oder mehrere Teilkörper aufzuteilen, wenn dies besondere Umstände erfordern. Im Allgemeinen können jedoch die auftretenden Anforderungen gut mit einem einteiligen Stützkörper 2 erfüllt werden, insbesondere dann, wenn sein elastisches Verhalten ausreicht, um die Schuheinlage der Abrollbewegung der Laufsohle des Schuhs folgen zu lassen. Die plastische Verformbarkeit des Stützkörpers 2 dient ja lediglich dazu, die Schuheinlage dauerhaft an Fußformen anzupassen, die von der durchschnittlichen durch die Grundform des Fußbettes bestimmten Fußform abweichen.

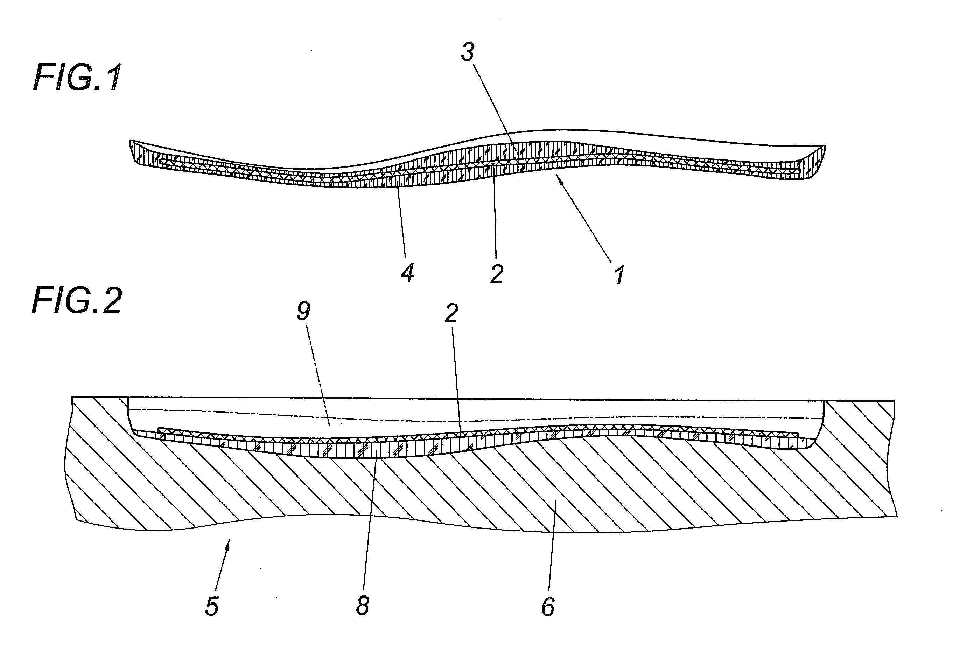

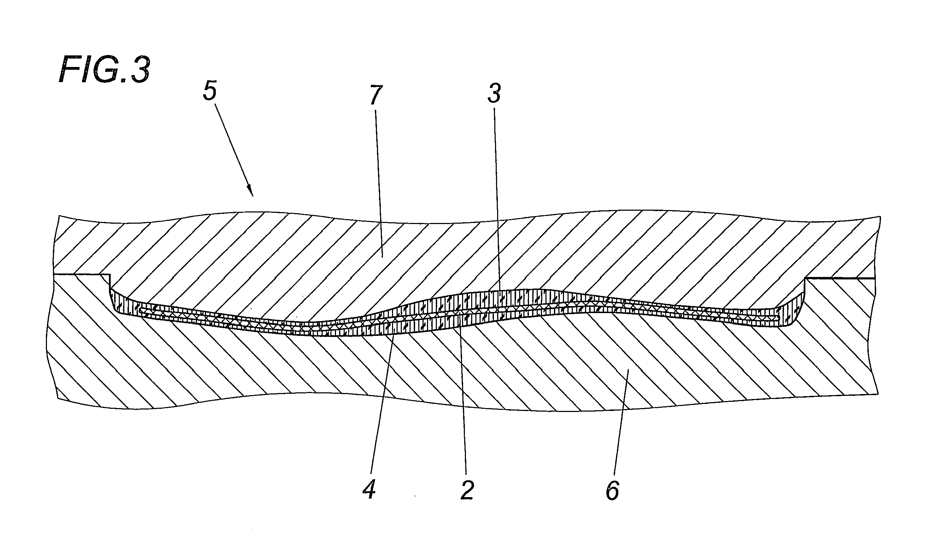

Zur Herstellung einer Schuheinlage gemäß der Fig. 1 wird nach den Fig. 2 und 3 eine Form 5 verwendet, die einen eine Matrize bildenden Unterteil 6 und einen Oberteil 7 umfasst, der als in den Unterteil 6 eingreifender Druckstempel ausgebildet ist. Wie die Fig. 2 erkennen lässt, wird zunächst eine abgemessene, der unteren Korkschicht 4 entsprechende Teilmenge 8 des mit einem Bindemittel versetzten Korkgranulats in den Unterteil 6 der Form 5 eingefüllt und dann der Stützkörper 2, der z. B. aus einem sohlenartigen Einsatz aus thermoplastischem Kunststoff, aber auch aus einer metallischen Einlage bestehen kann, auf die Teilmenge 8 des Korkgranulats aufgelegt, bevor die Restmenge 9 des Korkgranulats über den Dämpfungskörper 2 verteilt wird. Die verteilte Restmenge 9 des Korkgranulats ist in der Fig. 2 strichpunktiert angedeutet. Der plattenförmige Stützkörper 2 kann dabei entsprechend dem Ausführungsbeispiel eine vorgeformte Wölbung aufweisen oder diese Wölbung - falls eine solche Wölbung überhaupt gewünscht wird - erst beim Schließen der Form 5 erhalten, und zwar je nach der Beschaffenheit des Stützkörpers durch eine Druck- und Wärmeanwendung.

Nach der Befüllung der Form 5 kann diese geschlossen werden, indem der stempelartige Oberteil 7 gemäß der Fig. 3 in den matrizenförmigen Unterteil 6 eingeführt wird. Unter einer entsprechenden Druck- und Temperaturanwendung wird der Grundkörper 1 aus dem Korkgranulat geformt, wobei das dem Korkgranulat zugesetzte Bindemittel abbindet. Der Stützkörper 2 wird dabei an die oberen und unteren Korkschichten 3, 4 angeklebt, die aus der Teilmenge 8 und der Restmenge 9 des Korkgranulats hervorgegangen sind.

Wird eine zusätzliche Sohlenauflage gefordert, so kann diese vor dem Schließen der Form 5 auf die Restmenge 9 des Korkgranulats aufgelegt werden, um bei der Formung des Grundkörpers 1 zu einem Fußbett die Auftrittfläche des Fußbettes dauerhaft abzudecken.

Ein wesentlicher Vorteil einer erfindungsgemäßen Schuheinlage ist darin zu sehen, dass diese Schuheinlage nachträglich durch eine plastische Verformung des Stützkörpers 2 je nach dessen Beschaffenheit entweder nur unter Druck oder unter einer kombinierten Druck- und Wärmebelastung dauerhaft an unterschiedliche Fußformen angepasst werden kann, und zwar mit der Möglichkeit einer Nachjustierung.

## Patentansprüche

1. Schuheinlage in Form eines Fußbettes mit einem Grundkörper (1) und wenigstens einem Stützkörper (2), der einen im formgebenden Grundkörper aus gebundenem Korkgranulat eingebetteten Einsatz bildet, **dadurch gekennzeichnet, dass** der Stützkörper (2) zur nachträglichen Anpassung des Grundkörpers (1) an unterschiedliche Fußformen aus einem plastisch verformbaren Werkstoff besteht.

2. Schuheinlage nach Anspruch 1, **dadurch gekennzeichnet, dass** der Stützkörper (2) aus einer thermoplastischen Kunststoffplatte besteht.

3. Verfahren zum Herstellen einer Schuheinlage nach Anspruch 1 oder 2, wobei das mit einem Bindemittel versetzte Korkgranulat in eine Form eingefüllt und mit dem Schließen der Form unter Wärme und Druck zum Grundkörper ausgeformt wird, **dadurch gekennzeichnet, dass** zunächst eine abgemessene Teilmenge (8) des benötigten Korkgranulats in die Form (5) eingefüllt wird, dass dann der Stützkörper (2) auf die abgemessene Teilmenge (8) aufgebracht wird, bevor der Stützkörper (2) mit der restlichen Menge (9) an Korkgranulat abgedeckt und das Korkgranulat mit dem Schließen der Form (5) unter Einbindung des Stützkörpers (2) zum Grundkörper (1) ausgeformt wird, und dass gegebenenfalls der Grundkörper (1) nachträglich durch eine plastische Verformung des in ihm eingebetteten Stützkörpers (2) an die Fußform angepasst wird.
